# FASCICULE DE BREVET EUROPEEN

(11) **EP 3 763 971 B1**
(45) Date de publication et mention de la délivrance du brevet: **14.09.2022**
(21) Numéro de dépôt: 20182761.5
(22) Date de dépôt: 29.06.2020
(51) Int. Cl.: F16H 57/04, F01D 25/18, F16H 57/08, F16C 33/10, F16C 33/72

(54) **COUVERCLE DE CANALISATION D'HUILE ET REDUCTEUR MECANIQUE DE TURBOMACHINE D'AERONEF COMPORTANT UN TEL COUVERCLE**
ÖLLEITUNGSDECKEL UND MECHANISCHES REDUKTIONSGETRIEBE DES TRIEBWERKS EINES LUFTFAHRZEUGS, DAS EINEN SOLCHEN DECKEL UMFASST
COVER FOR OIL PIPE AND MECHANICAL GEAR FOR AN AIRCRAFT TURBINE ENGINE COMPRISING SUCH A COVER

(30) Priorité: 08.07.2019 FR 1907574
(43) Date de publication de la demande: 13.01.2021
(73) Titulaire: Safran Transmission Systems, 92700 Colombes (FR)
(72) Inventeur: DOMBEK, Alexis, Claude, Michel, 77550 MOISSY-CRAMAYEL (FR); PAP, Bálint, 77550 MOISSY-CRAMAYEL (FR)
(74) Mandataire: Gevers & Orès

(56) Documents cités:
- EP-A1- 2 317 181
- US-A1- 2005 215 389

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO 2010/092263 A1, FR 2 987 416 A1, FR 3 041 054 A1, EP 2 317 181 A1 qui divulgue le préambule de la revendication 1 et US 2005/215389 A1.

Le rôle d'un réducteur mécanique est de modifier le rapport de vitesse et de couple entre l'axe d'entrée et l'axe de sortie d'un mécanisme d'entrainement en rotation.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution Y différent, ils sont équirépartis sur le même diamètre de fonctionnement autour de l'axe des planétaires. Ces axes Y sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron. Un réducteur doit être lubrifié et l'apport d'huile de lubrification aux composants tournants d'un réducteur peut être problématique. L'huile est en général amenée au réducteur par un distributeur d'huile de lubrification.

Les satellites sont guidés en rotation par des paliers qui sont lubrifiés. Les paliers peuvent être composés d'éléments roulants (roulements à billes, à rouleaux, à rouleaux coniques, etc.) ou peuvent être des paliers hydrodynamiques. Dans ce dernier cas, chaque satellite est monté rotatif sur et autour d'un support tubulaire du porte-satellites, qui est alimenté en huile et qui est configuré pour former un film d'huile entre la périphérie externe du support et la périphérie interne du satellite. Pour cela, dans la technique actuelle, chaque satellite comprend une surface cylindrique interne qui s'étend autour d'une surface cylindrique externe du support et qui délimite avec cette dernière un espace annulaire de formation du film d'huile. Cet espace est alimenté en huile par des canalisations d'acheminement d'huile qui sont formés dans le support et s'étendent depuis la surface cylindrique externe jusqu'à une cavité interne du support qui est alimentée en huile par le distributeur précité.

La présente demande concerne un réducteur dont les satellites sont guidés par des paliers hydrodynamiques.

La technique actuelle présente toutefois des problématiques :
- dans un palier hydrodynamique ou lisse, l'huile se chauffe grâce au cisaillement d'huile de manière non-négligeable. L'huile plus chaude se trouve dans un coin d'huile proche de l'axe du moteur. Cette huile chaude est projetée du palier axialement et elle est ensuite redirigée vers le rayon extérieur du réducteur à cause de l'effet centrifuge. Cette huile touche les composants solides (les supports tubulaires, les satellites, et la couronne) du réducteur et chauffe par transfert de chaleur par convection ces composants solides ;
- cet échauffement est pénalisant car les supports tubulaires plus chauds vont chauffer l'huile dans l'enceinte du palier ;
- les supports plus chauds vont chauffer l'huile dans les cavités internes de ces supports, alimentées en huile, ce qui va diminuer la viscosité de l'huile, augmenter l'excentricité du palier, et se traduire par des pertes de frottement d'huile du palier ;
- l'échauffement des composants solides du réducteur génère des pertes de frottement plus élevées dans les paliers et augmente la possibilité du grippage entre la couronne et les satellites.

La présente invention propose un perfectionnement simple, efficace et économique pour améliorer la circulation et l'évacuation de l'huile dans un réducteur mécanique de turbomachine.

### Résumé de l'invention

L'invention concerne un couvercle de canalisation d'huile pour un réducteur mécanique de turbomachine, en particulier d'aéronef, ce couvercle étant configuré pour être fixé à un porte-satellites du réducteur et à être monté sur une extrémité axiale d'un support tubulaire de palier hydrodynamique d'un satellite du réducteur, ce couvercle comprenant un corps annulaire s'étendant autour d'un axe et comprenant un orifice central de montage de ladite extrémité axiale, corps comprenant :
- un premier déflecteur circonférentiel ayant une première étendue circonférentielle prédéterminée autour dudit axe, ce premier déflecteur comportant une surface circonférentielle de guidage d'huile, située radialement à l'extérieur par rapport audit axe,
- un second déflecteur circonférentiel ayant une seconde étendue circonférentielle prédéterminée autour dudit axe, ce second déflecteur comportant une surface circonférentielle de guidage d'huile, située radialement à l'intérieur par rapport audit axe,
   caractérisé en ce que les premier et second déflecteurs sont sensiblement diamétralement opposés par rapport audit axe,
   et en ce que le corps comprend en outre des canalisations d'évacuation d'huile qui traversent sensiblement axialement ledit corps et qui sont diamétralement opposées par rapport au premier déflecteur, ces canalisations débouchant axialement du côté dudit second déflecteur, radialement à l'intérieur de ce dernier par rapport audit axe.

La solution proposée dans cette invention est une modification des deux couvercles du palier ou du porte-satellites afin de canaliser l'huile chaude issue du palier à l'extérieur du réducteur pour éviter l'échauffement convectif des composants du réducteur. Les modifications comprennent au moins des canalisations d'évacuation d'huile et deux déflecteurs par couvercle. Un des déflecteurs est destiné à être situé en face du coin d'huile de façon à empêcher l'huile chaude de chauffer le support tubulaire. Ensuite, cette huile chaude est emmenée par effet centrifuge vers le deuxième déflecteur, qui sert à empêcher l'huile chaude de sortir du réducteur et de réchauffer le satellite. L'huile chaude dans le deuxième déflecteur est ensuite évacuée par les canalisations. Cette solution empêche l'échauffement des composants du réducteur épicycloïdal dû à l'huile chaude du palier, et permet en même temps à l'huile froide alimentant le support tubulaire de sortir librement à la périphérie du support en vue de la formation du film d'huile hydrodynamique. La solution proposée ci-dessous est compatible d'un réducteur épicycloïdal dont la couronne est fixe dans le repère du moteur. Elle est compatible de tout type de denture (droite, chevron), de tout type de porte-satellites, qu'il soit monobloc ou de type cage-porte / cage.

Le couvercle selon l'invention peut comprendre une ou plusieurs des caractéristiques suivantes, telles que définies dans les revendications dépendantes 2 à 10 :
- chacune des première et seconde étendues circonférentielles est comprise 160 et 200° environ,
- le premier déflecteur comprend des extrémités circonférentielles proches des extrémités circonférentielles du second déflecteur, de façon à ce que l'huile s'écoulant sur la surface de guidage du premier déflecteur puisse ensuite s'écouler sur la surface de guidage du second déflecteur,
- le premier déflecteur a une forme générale évasée (par exemple de manière conique ou biconique mais d'autres formes sont envisageables) du côté opposé au corps et/ou le second déflecteur a une forme générale évasée (par exemple de manière conique ou biconique mais d'autres formes sont envisageables) du côté du corps,
- le premier déflecteur comprend, à une extrémité libre située du côté opposé au corps, un rebord circonférentiel orienté radialement vers l'extérieur par rapport audit axe ; ce rebord est facultatif,
- le corps comprend une baignoire circonférentielle d'accumulation d'huile, cette baignoire étant diamétralement opposée par rapport au second déflecteur et débouchant du côté du premier déflecteur, radialement à l'extérieur de ce dernier,
- le second déflecteur comprend, à une extrémité libre située du côté opposé au corps, un rebord circonférentiel orienté du côté opposé au corps ; ce rebord est facultatif,
- la baignoire a une étendue circonférentielle autour de l'axe du support qui est inférieure ou égale à 360°, et qui est par exemple comprise entre 90 et 180°,
- la baignoire a en section axiale une forme générale triangulaire ou rectangulaire ou circulaire dont la base est située radialement à l'extérieur et le sommet est situé radialement à l'intérieur, par rapport à l'axe du support,
- les premier et second déflecteurs et les canalisations d'évacuation d'huile sont formés d'une seule pièce.

La présente invention concerne encore un réducteur mécanique de turbomachine, en particulier d'aéronef, ce réducteur comportant :
- un solaire ayant un axe de rotation,
- une couronne qui s'étend autour du solaire et qui est configurée pour être immobile en rotation autour dudit axe,
- des satellites qui sont engrenés avec le solaire et la couronne et qui sont maintenus par un porte-satellites qui est configuré pour être mobile en rotation autour dudit axe, chacun des satellites étant guidé en rotation par un palier hydrodynamique comportant (ou formé par) un support tubulaire autour duquel le satellite est monté rotatif, chacun des supports tubulaires comprenant une première rainure annulaire située à une première extrémité axiale du support, et une seconde rainure annulaire située à une seconde extrémité opposée du support, les première et seconde rainures étant orientées axialement dans des directions opposées,
- un distributeur d'huile de lubrification qui est configuré pour alimenter en huile des cavités internes desdits supports tubulaires, chacun des supports tubulaires comportant des canalisations d'acheminement d'huile depuis sa cavité interne jusqu'à sa périphérie externe en vue de la formation d'un film d'huile entre le support et le satellite, chacun des supports tubulaires étant fixé au porte-satellites par l'intermédiaire de deux couvercles, caractérisé en ce que les deux couvercles sont chacun définis selon une des revendications 1 à 10 et sont montés respectivement et coaxialement sur les extrémités axiales du support tubulaire, le couvercle monté sur la première extrémité axiale du support ayant ses déflecteurs qui sont engagés axialement dans la première rainure, et le couvercle monté sur la seconde extrémité axiale du support ayant ses déflecteurs qui sont engagés axialement dans la seconde rainure.

Le réducteur selon l'invention peut comprendre une ou plusieurs des caractéristiques suivantes, telles que définies dans les revendications dépendantes 12 à 14 :
- les canalisations d'acheminement sont sensiblement situées dans un même plan passant par l'axe du support,
- ledit plan passe sensiblement au niveau desdites canalisations d'évacuation,
- les canalisations d'acheminement débouchent dans une même rainure formée dans une surface cylindrique externe du support,
- les canalisations d'évacuation débouchent axialement du côté dudit second déflecteur, au niveau de la première ou seconde rainure du support,
- les canalisations ont une forme cylindrique, rectangulaire, de hublot, etc. L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue partielle en coupe axiale d'un réducteur mécanique connu de l'état de la technique.
[Fig. 3] la figure 3 est vue en coupe axiale d'un support tubulaire et de couvercles pour un réducteur mécanique selon un mode de réalisation de l'invention,
[Fig. 4] la figure 4 est une vue en perspective d'un des couvercles de la figure 3,
[Fig. 5] la figure 5 est une autre vue en perspective du couvercle de la figure 4, vu de face,
[Fig. 6] la figure 6 est autre vue en perspective du couvercle de la figure 4, vu de côté,
[Fig. 7] la figure 7 est vue en coupe transversale d'un réducteur équipé de supports tubulaires et de couvercles tels qu'illustrés à la figure,
[Fig. 8] la figure 8 est vue en coupe axiale d'un couvercle selon une variante de réalisation de l'invention,
[Fig. 9] la figure 9 est vue en coupe axiale d'un couvercle selon une autre variante de réalisation de l'invention,
[Fig. 10] la figure 10 est vue de face d'un couvercle selon une variante de réalisation de l'invention.

### Description détaillée de l'invention

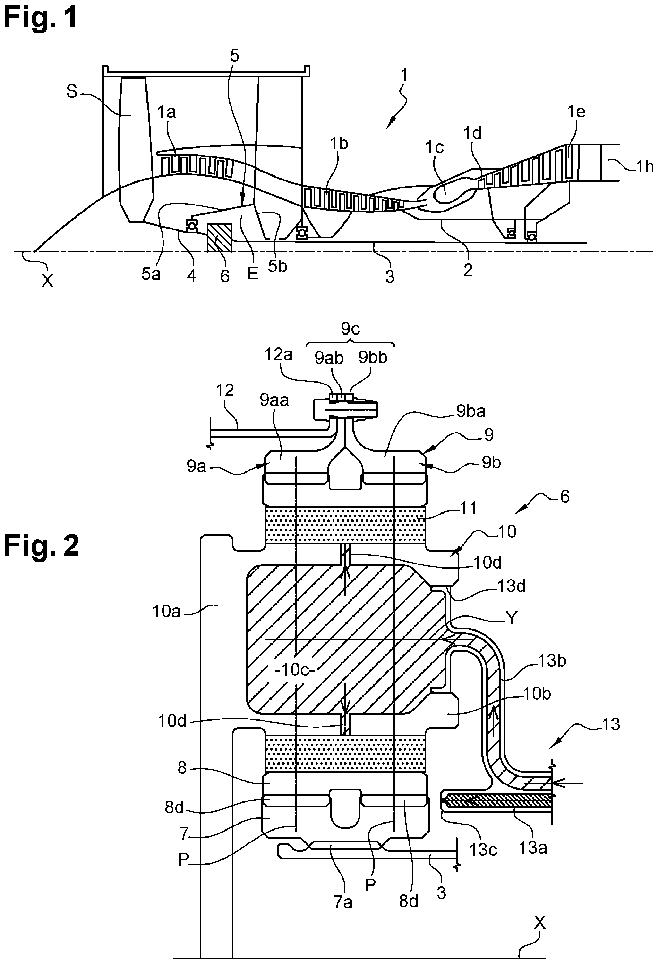

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Dans la présente demande, les expressions amont et aval font référence à la direction générale d'écoulement des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
- Dans cette configuration épicycloïdale, l'ensemble des satellites 8 entraine en rotation le porte-satellite 10 autour de l'axe X de la turbomachine.

La couronne est fixée au carter moteur ou stator 5 via un porte-couronne 12 et le porte-satellites 10 est fixé à l'arbre de soufflante 4.
- Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est prévu sur un des supports tubulaires 10b du porte-satellites 10 et tous les supports sont positionnés les uns par rapport aux autres à l'aide d'un ou plusieurs châssis structurels 10a du porte-satellites 10. Il existe un nombre de supports tubulaires 10b et de paliers 11 égal au nombre de satellites. Pour des raisons de fonctionnement, de montage, de fabrication, de contrôle, de réparation ou de rechange, les supports 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
- Une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
- Une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier 11. L'huile circule ensuite à travers le support 10b dans une ou des cavités 10c pour ensuite ressortir par des canalisations 10d afin de lubrifier les paliers des satellites.

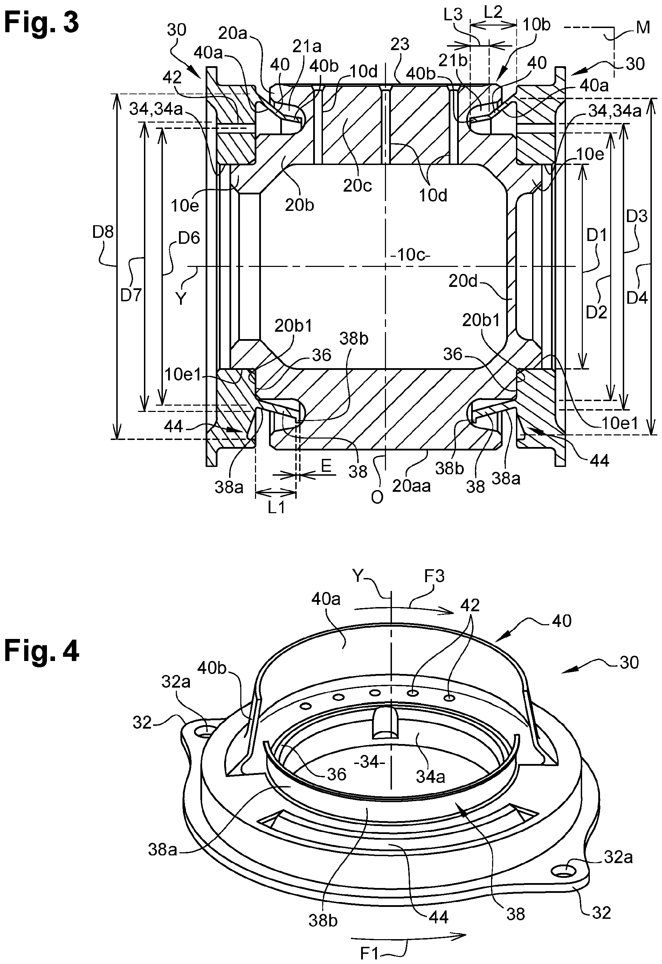

Les figures 3 à 7 illustrent un mode de réalisation d'un réducteur mécanique 6 selon l'invention.

La description qui précède s'applique à ce réducteur 6 dans la mesure où elle est techniquement compatible avec ce qui suit.

Le support tubulaire 10b de chaque satellite 8 comprend un corps monobloc dans l'exemple représenté qui comporte deux parois annulaires 20a, 20b coaxiales qui s'étendent l'une autour de l'autre et qui sont reliées entre elles par une âme annulaire 20c.

La paroi annulaire interne 20b est fermée à une extrémité par une cloison 20d et a une extrémité axiale ouverte du côté opposé, pour recevoir de l'huile apportée par le distributeur d'huile (non représenté). La paroi interne 20b définit ainsi la cavité 10c de réception de l'huile de lubrification.

La paroi annulaire externe 20a a une longueur ou dimension axiale mesurée le long de l'axe Y, qui est proche de celle de la paroi 20b. La paroi 20a comprend une surface cylindrique externe 20aa qui est configurée pour délimiter avec une surface cylindrique interne (non visible) du palier 8 un espace annulaire de réception d'huile et de formation d'un film d'huile en vue de la formation d'un palier hydrodynamique.

L'âme 20c a une longueur plus petite mesurée de la même façon, si bien que les extrémités axiales des parois 20a, 20b délimitent entre elles des rainures annulaires 21a, 21b. Cette configuration permet de conférer une certaine souplesse au support 10b, au niveau de chacune de ses extrémités axiales. Le support 10b comprend ainsi une première rainure annulaire 21a située d'un côté et dont l'ouverture débouche en direction axiale, et une seconde rainure annulaire 21b située du côté opposé et dont l'ouverture débouche axialement du côté opposé à la rainure 21a. Ces rainures 21a, 21b ont en section une forme générale en U.

Le support 10b comprend des canalisations 10d d'acheminement d'huile de lubrification depuis la cavité 10c jusqu'à la périphérie externe du support 10b. Dans l'exemple représenté, ces canalisations 10d sont au nombre de trois même si ce nombre n'est pas limitatif. Elles ont chacune une forme générale allongée et cylindrique. Elles sont alignées et régulièrement espacées dans un plan M passant par l'axe Y du support 10b, et qui est le plan du dessin à la figure 3.

Les extrémités radialement externes des canalisations 10d débouchent dans une même rainure 23 formée sur la surface externe 20aa du support 10b. Cette rainure 23 a une forme générale allongée et s'étend sensiblement dans le plan M. Les extrémités radialement internes des canalisations 10d débouchent dans la cavité 10c.

A chacune de ses extrémités axiales, le support 10b comprend un rebord cylindrique 10e de montage d'un couvercle 30. Les rebords 10e s'étendent autour de l'axe Y. Ils sont situés sur la paroi interne 20b et s'étendent axialement dans des directions opposées.

Chaque rebord 10e comprend une surface cylindrique externe 10e1 de montage du couvercle 30 correspondant et qui est reliée à une surface annulaire radiale 20b1 de la paroi interne 20b. Le rebord 10e qui est situé au niveau de la cloison 20d s'étend en saillie depuis celle-ci.

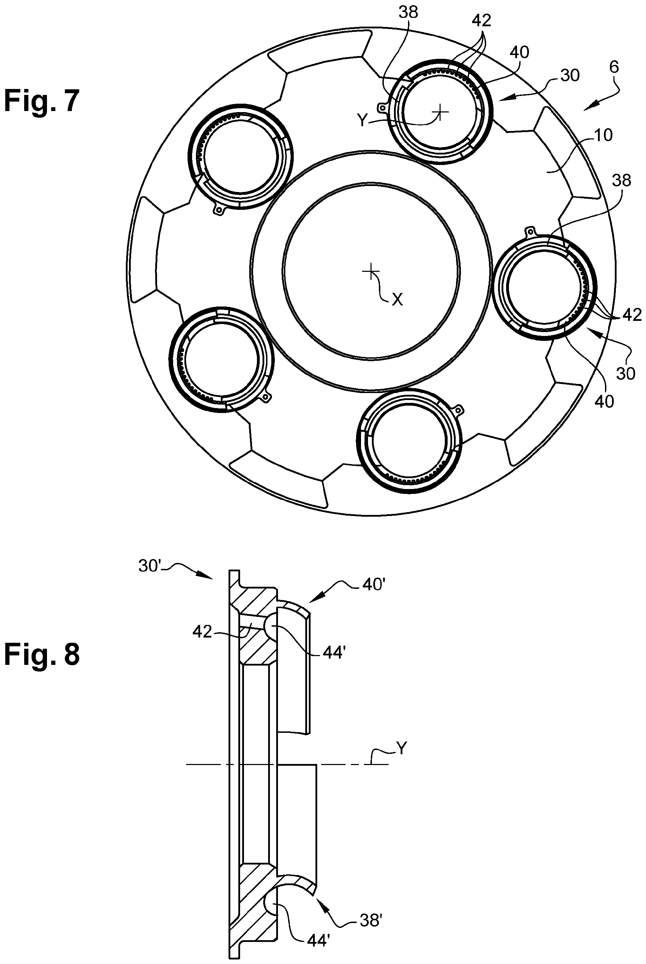

Dans l'exemple représenté, les couvercles 30 ont une double fonction de fixation du support tubulaire 10b au porte-satellites 10 (représenté à la figure 7) et de canalisation de l'huile d'alimentation du palier hydrodynamique comportant (formé par) le support 10b.

Les couvercles 30 situés aux extrémités de chaque support 10b du porte-satellites sont identiques et sont mieux visibles aux figures 4 à 6.

Chaque couvercle 30 comprend un corps de forme générale annulaire autour d'un axe qui est l'axe Y du support tubulaire 10b lorsqu'ils sont assemblés l'un sur l'autre.

Chaque couvercle 30 comprend à la périphérie externe du corps une bride annulaire radiale ou des pattes radiales 32 de fixation sur le porte-satellites 10. Cette bride ou ces pattes 32 comprennent des orifices 32a de passage de vis ou analogues destinées à être vissées dans des trous taraudés du porte-satellites 10 ou à traverser des orifices du porte-satellite et à recevoir des écrous.

Chaque couvercle 30 comprend en outre à la périphérie interne du corps un orifice 34 de montage sur une extrémité d'un support 10b et en particulier sur un rebord 10e. L'orifice 34 comprend une surface cylindrique interne 34a destinée à coopérer avec la surface 10e1 du support 10b en vue du centrage du couvercle 30 sur le support 10b. Le couvercle 30 comprend en outre une surface annulaire radiale 36 à sa périphérie interne qui est destinée à être appliquée axialement contre la surface radiale 20b1 du support 10b.

La surface 34a a un diamètre D1 légèrement supérieur au diamètre de la surface 10e1. La surface 36 s'étend sensiblement entre le diamètre D1 et un diamètre D2 supérieur à D1.

Sur une première circonférence de diamètre D3, supérieur à D2, la couronne 30 comprend un premier déflecteur circonférentiel 38.

Sur une seconde circonférence de diamètre D4, supérieur à D3, la couronne 30 comprend un second déflecteur circonférentiel 40.

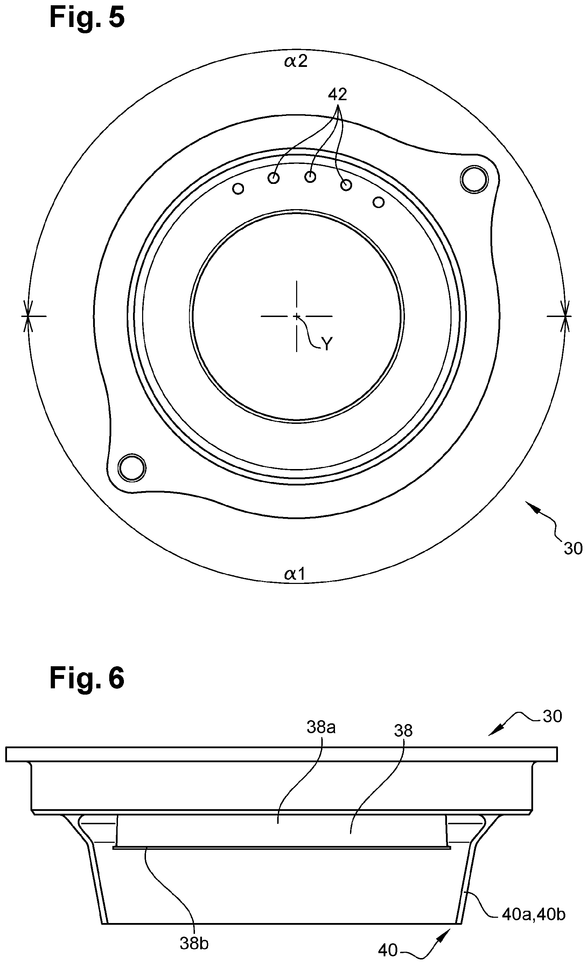

Le premier déflecteur 38 a une étendue circonférentielle α1 prédéterminée autour de l'axe Y, qui est par exemple comprise entre 160 et 200° environ (figure 5).

Ce déflecteur 38 a une forme générale évasée du côté opposé au corps et comprend une surface circonférentielle 38a de guidage d'huile, qui est située radialement à l'extérieur par rapport à l'axe Y (figures 3, 4 et 6).

Le déflecteur 38 comprend, à une extrémité libre située du côté opposé au corps, un rebord circonférentiel 38b orienté radialement vers l'extérieur par rapport à l'axe Y. Mesurées le long de l'axe Y, le déflecteur 38 a une longueur L1 et son rebord a une épaisseur E (figure 3). Le rebord 38b permet d'augmenter la capacité de maintien d'huile par le déflecteur 38.

Le second déflecteur 40 a une étendue circonférentielle α2 prédéterminée autour de l'axe Y, qui est par exemple comprise entre 160 et 200° environ. Ce déflecteur 40 a une forme générale évasée du côté du corps et comprend une surface circonférentielle 40a de guidage d'huile, qui est située radialement à l'intérieur par rapport à l'axe Y.

Le déflecteur 40 comprend, à une extrémité libre située du côté opposé au corps, un rebord circonférentiel 40b incliné par rapport au reste du déflecteur. Mesurées le long de l'axe Y, le déflecteur 40 a une longueur L2 similaire à L1 et son rebord 40b a une longueur L3 qui représente 30 à 80% de la longueur L2.

En référence à la figure 2 qui montre une coupe axiale du support 10b et des couvercles 30, on constate que le premier déflecteur 38 a une forme globalement tronconique ou est incliné par rapport à l'axe Y d'un angle de l'ordre de 20 à 50° environ. Le second déflecteur 34 a une forme globalement biconique et comprend une première partie située du côté du corps, qui est inclinée par rapport à l'axe Y d'un angle de l'ordre de 30 à 60° environ, et une seconde partie située du côté opposé, qui est inclinée par rapport à l'axe Y d'un angle de l'ordre de 10 à 40° environ. Le rayon du premier déflecteur diminue vers le plan médian du palier, tandis que le rayon du deuxième déflecteur augmente vers le plan médian du palier. Le changement de conicité du second déflecteur permet d'augmenter sa capacité de maintien d'huile.

Comme on le voit dans les dessins, les déflecteurs 38, 40 sont sensiblement diamétralement opposés par rapport à l'axe Y. Du fait de leurs étendues circonférentielle s proches voire supérieures à 180°, les extrémités circonférentielles du déflecteur 38 sont proches de celles du déflecteur 40, ce qui facilite l'écoulement de l'huile, comme cela sera décrit plus en détail dans ce qui suit. Dans un exemple particulier de réalisation de l'invention, les extrémités circonférentielles des déflecteurs sont séparées les unes des autres d'un angle de 5 à 10° environ de façon à faciliter la fabrication du couvercle, en particulier par usinage.

Le couvercle 30 comprend en outre des canalisations 42 d'évacuation d'huile qui traversent sensiblement axialement le corps et qui sont diamétralement opposées par rapport au déflecteur 38. Ces canalisations 42 peuvent être faiblement inclinées par rapport à l'axe précité. Ces canalisations 42 débouchent axialement du côté du déflecteur 40, radialement à l'intérieur de ce dernier par rapport à l'axe Y.

Dans l'exemple représenté, le couvercle 30 comprend une série de cinq canalisations 42 qui sont réparties sur un secteur angulaire à une circonférence de diamètre D6, ce diamètre D6 étant compris entre D3 et D4 dans l'exemple représenté (figure 3).

Les canalisations 42 ont une forme générale cylindrique et s'étendent parallèlement à l'axe Y.

Le couvercle 30 comprend en outre dans l'exemple représenté une baignoire circonférentielle 44 d'accumulation d'huile aussi appelé coin d'huile. Cette baignoire 44 est diamétralement opposée par rapport au déflecteur 40 et débouche du côté du déflecteur 38, radialement à l'extérieur de ce dernier. La baignoire 44 a une étendue circonférentielle autour de l'axe Y comprise entre 100 et 150°. Elle s'étend en direction radiale entre une circonférence de diamètre D7 et une circonférence de diamètre D8, ces diamètres étant supérieurs à D1, D2, D3 et D6.

Comme cela est visible à la figure 3, en section axiale, cette baignoire 44 a une forme générale triangulaire dont la base est située radialement à l'extérieur et le sommet est situé radialement à l'intérieur.

En position de montage représentée à la figure 3, les couvercles 30 sont disposés de manière symétrique par rapport à un plan médian O perpendiculaire à Y et passant par le milieu du support 10b. Les couvercles 30 sont engagés sur les rebords 10e du support 10b de façon à ce que les déflecteurs 38, 40 s'engagent axialement dans les rainures 21a, 21b. Lorsque tous les supports 10b et leurs couvercles 30 sont fixés sur le porte-satellites 10, on obtient la configuration illustrée à la figure 7. Dans cet exemple illustré, les couvercles sont tous identiques et disposés de manière identique autour de leurs axes Y et de l'axe X du réducteur. En variante, les couvercles d'un réducteur pourraient être différents, ou bien ils pourraient être identiques mais disposés différemment les uns des autres sur le réducteur. Cela dépend notamment du centre de gravité de chaque couvercle et des positions des coins d'huile précités.

Les sens de rotation des satellites 8 sont indiqués par les flèches F1 aux figures 4 et 7. La flèche F2 représente le sens de rotation du solaire 7 et la flèche F3 représente le sens de rotation du porte-satellites 10.

En fonctionnement, de l'huile est injectée par le distributeur 13 (figure 2) dans les cavités 10b des supports 10b et s'écoule jusqu'aux rainures 23 à travers les canalisations 10d, de façon à former des films d'huile entre les supports 10b et leurs satellites 8. Cette huile a tendance à s'écouler sur les côtés des supports 10b dans les rainures 21a, 21b. Les déflecteurs 38 sont situés du côté de l'axe X de rotation du porte-satellite 10 et l'huile dans la rainure 21a a tendance dans la zone de localisation des déflecteurs à s'accumuler dans les baignoires 44 puis à s'écouler sur les surfaces 38a des déflecteurs sous l'effet des forces centrifuges. Cette huile circule circonférentiellement depuis la baignoire 44 jusqu'aux extrémités circonférentielles des déflecteurs 38 où elle s'écoule ensuite vers les déflecteurs 40 et est guidée par les surfaces 40a de ces déflecteurs 40 jusqu'aux canalisations 42. L'huile s'écoule alors à travers ces canalisations 42 pour être évacuée à l'extérieur et de préférence recyclée.

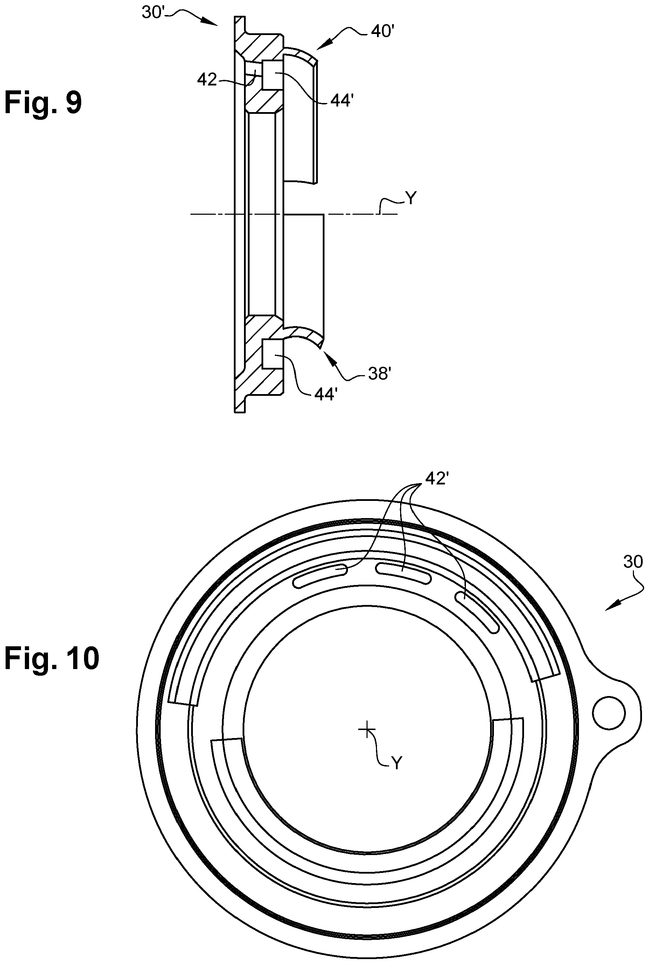

Les variantes de réalisation des figures 8 et 9 montrent d'une part que les déflecteurs 38', 40' du couvercle 30' ne sont pas forcément tronconiques. Le déflecteur 38' a en section une forme générale incurvée dont la concavité est orientée radialement vers l'extérieur par rapport à l'axe Y. Le déflecteur 40' a en section une forme générale incurvée dont la concavité est orientée radialement vers l'intérieur par rapport à l'axe Y. Par ailleurs, la baignoire 44 a en section une forme générale circulaire ou arrondie dans la figure 8 et une forme générale rectangulaire dans la figure 9. Dans chacune des variantes des figures 8 et 9, la baignoire 44 a une étendue circonférentielle de 360° autour de l'axe Y.

La figure 1 montre une variante de réalisation d'un couvercle 30 dans lequel les canalisations 42' ont une forme générale allongée en direction circonférentielle autour de l'axe Y, dite de « hublot ».

Les gains apportés par cette invention sont notamment :
- refroidissement global des composants du réducteur,
- augmentation de la marge de grippage entre la couronne et les satellites et entre les satellites et le solaire,
- environ 10% de pertes de frottement du palier en moins (température d'huile moins élevée),
- possible diminution de la longueur de la denture de la couronne et du satellite,
- débit d'huile moins élevé,
- meilleure évacuation des calories,
- possible diminution de la longueur des supports tubulaires des paliers et des satellites,
   - possible diminution de risque de contact entre les satellites et ces supports.

## Revendications

1. Couvercle (30) de canalisation d'huile pour un réducteur mécanique (6) de turbomachine (1) d'aéronef, ce couvercle étant configuré pour être fixé à un porte-satellites (10) du réducteur et à être monté sur une extrémité axiale d'un support tubulaire (10b) de palier hydrodynamique d'un satellite (8) du réducteur, ce couvercle comprenant un corps annulaire s'étendant autour d'un axe (Y) et comprenant un orifice central (34) de montage sur ladite extrémité axiale, le corps comprenant :
- un premier déflecteur circonférentiel (38) ayant une première étendue circonférentielle (α1) prédéterminée autour dudit axe (Y), ce premier déflecteur comportant une surface circonférentielle (38a) de guidage d'huile, située radialement à l'extérieur par rapport audit axe (Y),
- un second déflecteur circonférentiel (40) ayant une seconde étendue circonférentielle (α2) prédéterminée autour dudit axe (Y), ce second déflecteur comportant une surface circonférentielle (40a) de guidage d'huile, située radialement à l'intérieur par rapport audit axe (Y), **caractérisé en ce que** les premier et second déflecteurs sont sensiblement diamétralement opposés par rapport audit axe (Y), et **en ce que** le corps comprend en outre des
canalisations (42) d'évacuation d'huile qui traversent sensiblement axialement ledit corps et qui sont diamétralement opposées par rapport au premier déflecteur (38), ces canalisations débouchant axialement du côté dudit second déflecteur (40), radialement à l'intérieur de ce dernier par rapport audit axe (Y).

2. Couvercle (30) selon la revendication 1, dans lequel chacune des première et seconde étendues circonférentielles (α1, α2) est comprise entre 160 et 200° environ.

3. Couvercle (30) selon la revendication 1 ou 2, dans lequel le premier déflecteur (38) comprend des extrémités circonférentielles proches des extrémités circonférentielles du second déflecteur (40), de façon à ce que l'huile s'écoulant sur la surface (38a) de guidage du premier déflecteur puisse ensuite s'écouler sur la surface de guidage (40a) du second déflecteur.

4. Couvercle (30) selon l'une des revendications précédentes, dans lequel le premier déflecteur (38) a une forme générale évasée du côté opposé au corps et/ou le second déflecteur (40) a une forme générale évasée du côté du corps.

5. Couvercle (30) selon l'une des revendications précédentes, dans lequel le premier déflecteur (38) comprend, à une extrémité libre située du côté opposé au corps, un rebord circonférentiel (38b) orienté radialement vers l'extérieur par rapport audit axe (Y).

6. Couvercle (30) selon l'une des revendications précédentes, dans lequel le corps comprend une baignoire circonférentielle (44) d'accumulation d'huile, cette baignoire étant diamétralement opposée par rapport au second déflecteur (40) et débouchant du côté du premier déflecteur (38), radialement à l'extérieur de ce dernier.

7. Couvercle (30) selon l'une des revendications précédentes, dans lequel le second déflecteur (40) comprend, à une extrémité libre située du côté opposé au corps, un rebord circonférentiel (40b) orienté du côté opposé au corps.

8. Couvercle (30) selon la revendication 6 ou 7, dans lequel la baignoire (44) a une étendue circonférentielle autour de l'axe (Y) qui est inférieure ou égale à 360°, et qui est de préférence comprise entre 90° et 180°.

9. Couvercle (30) selon l'une des revendications 6 à 8, dans lequel la baignoire (44) a en section axiale une forme générale triangulaire ou rectangulaire ou circulaire dont la base est située radialement à l'extérieur et le sommet est situé radialement à l'intérieur, par rapport à l'axe (Y).

10. Couvercle (30) selon l'une des revendications 1 à 9, dans lequel les premier et second déflecteurs (38, 40) et les canalisations (42) sont formés d'une seule pièce.

11. Réducteur mécanique (6) de turbomachine (1) d'aéronef, ce réducteur comportant :
- un solaire (7) ayant un axe de rotation (X),
- une couronne (9) qui s'étend autour du solaire (7) et qui est configurée pour être immobile en rotation autour dudit axe (X),
- des satellites (8) qui sont engrenés avec le solaire (7) et la couronne (9) et qui sont maintenus par un porte-satellites (10) qui est configuré pour être mobile en rotation autour dudit axe (X), chacun des satellites (8) étant guidé en rotation par un palier hydrodynamique comportant un support tubulaire (10b) autour duquel le satellite (8) est monté rotatif, chacun des supports tubulaires (10b) comprenant une première rainure annulaire (21a) située à une première extrémité axiale du support tubulaire (10b), et une seconde rainure annulaire (21b) située à une seconde extrémité opposée du support, les première et seconde rainures étant orientées axialement dans des directions opposées,
- un distributeur (13) d'huile de lubrification qui est configuré pour alimenter en huile des cavités internes (10c) desdits supports tubulaires, chacun des supports tubulaires (10b) comportant des canalisations (10d) d'acheminement d'huile depuis sa cavité interne (10c) jusqu'à sa périphérie externe en vue de la formation d'un film d'huile entre le support (10b) et le satellite (8),
chacun des supports tubulaires (10b) étant fixé au porte-satellites (10) par l'intermédiaire de deux couvercles (30) **caractérisé en ce que** les deux couvercles sont chacun définis selon l'une des revendications précédentes et sont montés respectivement et coaxialement sur les extrémités axiales du support tubulaire, le couvercle monté sur la première extrémité axiale du support ayant ses déflecteurs qui sont engagés axialement dans la première rainure, et le couvercle monté sur la seconde extrémité axiale du support ayant ses déflecteurs qui sont engagés axialement dans la seconde rainure.

12. Réducteur mécanique (6) selon la revendication précédente, dans lequel les canalisations d'évacuation (42) débouchent axialement du côté dudit second déflecteur (40), au niveau de la première ou seconde rainure (21a, 21b) du support.

13. Réducteur mécanique (6) selon la revendication 11 ou 12, dans lequel les canalisations d'acheminement (10d) sont sensiblement situées dans un même plan passant par l'axe (Y), ledit plan passe sensiblement au niveau desdites canalisations d'évacuation (42).

14. Réducteur mécanique (6) selon la revendication 13, dans lequel les canalisations d'acheminement (10d) débouchent dans une même rainure (23) formée dans une surface cylindrique externe (20aa) du support (10b).

15. Turbomachine (1) d'aéronef, comportant un réducteur mécanique (6) selon l'une des revendications 11 à 14.

## Patentansprüche

1. Ölkanaldeckel (30) für ein mechanisches Untersetzungsgetriebe (6) einer Turbomaschine (1) eines Luftfahrzeugs, wobei dieser Deckel dazu konfiguriert ist, an einem Planetenträger (10) des Untersetzungsgetriebe befestigt zu werden und an einem axialen Ende eines rohrförmigen Trägers (10b) eines hydrodynamischen Lagers eines Planetenrads (8) des Untersetzungsgetriebes montiert zu werden, wobei dieser Deckel einen ringförmigen Körper umfasst, der sich um eine Achse (Y) erstreckt, und eine zentrale Öffnung (34) zur Montage an dem axialen Ende umfasst, wobei der Körper umfasst:
- einen ersten Umfangsdeflektor (38), der eine vorbestimmte erste Umfangserstreckung (α1) um die Achse (Y) aufweist, wobei dieser erste Deflektor eine Umfangsfläche (38a) zum Führen von Öl umfasst, die sich in Bezug auf die Achse (Y) radial auf der Außenseite befindet,
- einen zweiten Umfangsdeflektor (40), der eine vorbestimmte zweite Umfangserstreckung (a2) um die Achse (Y) aufweist, wobei dieser zweite Deflektor eine Umfangsfläche (40a) zum Führen von Öl umfasst, die sich in Bezug auf die Achse (Y) radial auf der Innenseite befindet, **dadurch gekennzeichnet, dass** der erste und der zweite Deflektor in Bezug auf die Achse (Y) im Wesentlichen diametral gegenüberliegend sind und dadurch, dass der Körper weiter Ölabführkanäle (42) umfasst, die den Körper im Wesentlichen axial durchqueren und die in Bezug auf den ersten Deflektor (38) diametral gegenüberliegend sind, wobei diese Kanäle axial auf der Seite des zweiten Deflektors (40), in Bezug auf die Achse (Y) radial auf der Innenseite dieses Letzteren münden.

2. Deckel (30) nach Anspruch 1, wobei jede der ersten und der zweiten Umfangserstreckung (α1, α2) etwa zwischen 160 und 200° beträgt.

3. Deckel (30) nach Anspruch 1 oder 2, wobei der erste Deflektor (38) Umfangsenden in der Nähe der Umfangsenden des zweiten Deflektors (40) derart umfasst, dass das Öl, das auf der Führungsoberfläche (38a) des ersten Deflektors fließt, anschließend auf der Führungsoberfläche (40a) des zweiten Deflektors fließen kann.

4. Deckel (30) nach einem der vorstehenden Ansprüche, wobei der erste Deflektor (38) auf der dem Körper gegenüberliegenden Seite eine allgemeine aufgeweitete Form aufweist und/oder der zweite Deflektor (40) auf der Seite des Körpers eine allgemeine aufgeweitete Form aufweist.

5. Deckel (30) nach einem der vorstehenden Ansprüche, wobei der erste Deflektor (38) an einem freien Ende, das sich auf der dem Körper gegenüberliegenden Seite befindet, einen Umfangsrand (38b) umfasst, der in Bezug auf die Achse (Y) radial nach außen ausgerichtet ist.

6. Deckel (30) nach einem der vorstehenden Ansprüche, wobei der Körper eine Umfangswanne (44) zum Sammeln von Öl umfasst, wobei diese Wanne in Bezug auf den zweiten Deflektor (40) diametral gegenüberliegend ist und auf der Seite des ersten Deflektors (38) radial auf der Außenseite dieses Letzteren mündet.

7. Deckel (30) nach einem der vorstehenden Ansprüche, wobei der zweite Deflektor (40) an einem freien Ende, das sich auf der dem Körper gegenüberliegenden Seite befindet, einen Umfangsrand (40b) umfasst, der auf die dem Körper gegenüberliegende Seite ausgerichtet ist.

8. Deckel (30) nach Anspruch 6 oder 7, wobei die Wanne (44) eine Umfangserstreckung um die Achse (Y) aufweist, die kleiner oder gleich 360° ist und die vorzugsweise zwischen 90° und 180° beträgt.

9. Deckel (30) nach einem der Ansprüche 6 bis 8, wobei die Wanne (44) im axialen Schnitt eine allgemeine dreieckige oder viereckige oder kreisförmige Form aufweist, bei der in Bezug auf die Achse (Y) die Basis sich radial auf der Außenseite befindet und die Spitze sich radial auf der Innenseite befindet.

10. Deckel (30) nach einem der Ansprüche 1 bis 9, wobei der erste und der zweite Deflektor (38, 40) und die Kanäle (42) aus einem einzigen Stück geformt sind.

11. Mechanisches Untersetzungsgetriebe (6) einer Turbomaschine (1) eines Luftfahrzeugs, wobei dieses Untersetzungsgetriebe umfasst:
- ein Sonnenrad (7), das eine Drehachse (X) aufweist,
- eine Krone (9), die sich um das Sonnenrad (7) erstreckt und die dazu konfiguriert ist, in Bezug auf die Achse (X) drehfest zu sein,
- Planetenräder (8), die mit dem Sonnenrad (7) und der Krone (9) in Eingriff stehen und die von einem Planetenträger (10) gehalten werden, der dazu konfiguriert ist, drehbeweglich um die Achse (X) zu sein, wobei jedes der Planetenräder (8) bei einer Drehung durch ein hydrodynamisches Lager geführt wird, das einen rohrförmigen Träger (10b) umfasst, um den das Planetenrad (8) drehend montiert ist, wobei jeder der rohrförmigen Träger (10b) eine erste ringförmige Nut (21a), die sich an einem ersten axialen Ende des rohrförmigen Trägers (10b) befindet, und eine zweite ringförmige Nut (21b) umfasst, die sich an einem zweiten Ende gegenüberliegend zum Träger befindet, wobei die erste und die zweite Nut axial in gegenüberliegenden Richtungen ausgerichtet sind,
- einen Schmierölverteiler (13), der so konfiguriert ist, dass er innere Hohlräume (10c) der rohrförmigen Träger mit Öl versorgt, wobei jeder der rohrförmigen Träger (10b) Kanäle (10d) zum Befördern von Öl von seinem inneren Hohlraum (10c) zu seinem äußeren Umfang umfasst, um einen Ölfilm zwischen dem Träger (10b) und dem Planetenrad (8) zu bilden,
wobei jeder der rohrförmigen Träger (10b) mithilfe von zwei Deckeln (30) am Planetenträger (10) befestigt ist, **dadurch gekennzeichnet, dass** die zwei Deckel jeweils nach einem der vorstehenden Ansprüche definiert sind und entsprechend und koaxial an den axialen Ende des rohrförmigen Trägers montiert sind, wobei der am ersten axialen Ende des Trägers montierte Deckel seine Deflektoren axial mit der ersten Nut in Eingriff stehend aufweist und der am zweiten axialen Ende des Trägers montierte Deckel seine Deflektoren axial mit der zweiten Nut in Eingriff stehend aufweist.

12. Mechanisches Untersetzungsgetriebe (6) nach dem vorstehenden Anspruch, wobei die Kanäle zum Abführen (42) axial auf der Seite des zweiten Deflektors (40), an der ersten oder der zweiten Nut (21, 21b) des Trägers münden.

13. Mechanisches Untersetzungsgetriebe (6) nach Anspruch 11 oder 12, wobei sich die Kanäle zum Befördern (10d) im Wesentlichen in einer selben Ebene befinden, die durch die Achse (Y) verläuft, wobei die Ebene im Wesentlichen an den Kanälen zum Abführen (42) verläuft.

14. Mechanisches Untersetzungsgetriebe (6) nach Anspruch 13, wobei die Kanäle zum Befördern (10d) in einer selben Nut (23) münden, die in einer äußeren zylindrischen Oberfläche (20aa) des Trägers (10b) gebildet ist.

15. Turbomaschine (1) eines Flugzeugs, die ein mechanisches Untersetzungsgetriebe (6) nach einem der Ansprüche 11 bis 14 umfasst.

## Claims

1. An oil pipe cover (30) for a mechanical reduction gear (6) of an aircraft turbomachine (1), this cover being configured to be fixed to a planet carrier (10) of the reduction gear and to be mounted on an axial end of a tubular support (10b) for a hydrodynamic bearing of a planet gear (8) of the reduction gear, this cover comprising an annular body extending around an axis (Y) and comprising a mounting central orifice (34) on said axial end, the body comprising:
- a first circumferential deflector (38) having a first predetermined circumferential extent (α1) around said axis (Y), this first deflector comprising a circumferential oil guiding surface (38a) located radially outwards with respect to said axis (Y),
- a second circumferential deflector (40) having a second predetermined circumferential extent (2) around said axis (Y), this second deflector comprising a circumferential oil guiding surface (40a) located radially inwards with respect to said axis (Y),
**characterized in that** said first and second deflectors are substantially diametrically opposed with respect to said axis (Y), and **in that** the body comprises further oil discharge pipes (42) which pass substantially axially through said body and which are diametrically opposed with respect to the first deflector (38), these pipes opening axially on the side of said second deflector (40), radially inside the latter with respect to said axis (Y).

2. The cover (30) according to claim 1, wherein each of the first and second circumferential extents (α1, α2) is between approximately 160 and 200°.

3. The cover (30) according to claim 1 or 2, wherein the first deflector (38) comprises circumferential ends close to the circumferential ends of the second deflector (40), so that the oil flowing on the guiding surface (38a) of the first deflector can then flow on the guiding surface (40a) of the second deflector.

4. The cover (30) according to any one of the preceding claims, wherein the first deflector (38) has a generally flared shape on the side opposite to the body and/or the second deflector (40) has a generally flared shape on the side of the body.

5. The cover (30) according to any one of the preceding claims, wherein the first deflector (38) comprises, at a free end located on the side opposite to the body, a circumferential edge (38b) oriented radially outwards with respect to said axis (Y).

6. The cover (30) according to any one of the preceding claims, wherein the body comprises an oil accumulating circumferential tub (44), this tub being diametrically opposed with respect to the second deflector (40) and opening on the side of the first deflector (38), radially outside the latter.

7. The cover (30) according to any one of the preceding claims, wherein the second deflector (40) comprises, at a free end located on the side opposite to the body, a circumferential edge (40b) oriented on the side opposite to the body.

8. The cover (30) according to claim 6 or 7, wherein the tub (44) has a circumferential extents around the axis (Y) which is less than or equal to 360°, preferably between 90° and 180°.

9. The cover (30) according to one of claims 6 to 8, wherein the tub (44) has in axial section a generally triangular or rectangular or circular shape, the base of which is located radially outside and the apex of which is located radially inside, with respect to the axis (Y).

10. The cover (30) according to any one of claims 1 to 9, wherein the first and second deflectors (38, 40) and the pipes (42) are formed in a single piece.

11. A mechanical reduction gear (6) for an aircraft turbomachine (1), this reduction gear comprising:
- a sun gear (7) having an axis of rotation (X),
- a ring gear (9) which extends around the sun gear (7) and which is configured to be immobile in rotation around said axis (X),
- planet gears (8) which are meshed with the sun gear (7) and the ring gear (9) and which are held by a planet carrier (10) which is configured to be rotatable around said axis (X), each of the planet gears (8) being guided in rotation by a hydrodynamic bearing comprising a tubular support (10b) around which the planet gear (8) is rotatably mounted, each of the tubular supports (10b) comprising a first annular groove (21a) located at a first axial end of the tubular support (10b), and a second annular groove (21b) located at a second opposite end of the support, the first and second grooves being oriented axially in opposite directions,
- a lubricating oil distributor (13) which is configured to supply oil to internal cavities (10c) of said tubular supports, each of the tubular supports (10b) comprising oil conveying pipes (10d) from its internal cavity (10c) to its outer periphery for forming an oil film between the support (10b) and the planet gear (8),
each of the tubular supports (10b) being fixed to the planet carrier (10) via two covers (30) **characterized in that** the two covers are each defined according to any one of the preceding claims and are respectively and coaxially mounted on the axial ends of the tubular support, the cover mounted on the first axial end of the support having its deflectors which are axially engaged in the first groove, and the cover mounted on the second axial end of the support having its deflectors which are axially engaged in the second groove.

12. The mechanical reduction gear (6) according to the preceding claim, wherein the discharge pipes (42) open axially on the side of said second deflector (40), at the first or second groove (21a, 21b) of the support.

13. The mechanical reduction gear (6) according to claim 11 or 12, wherein the conveying pipes (10d) are substantially located in the same plane passing through the axis (Y), said plane passes substantially at the level of said discharge pipes (42).

14. The mechanical reduction gear (6) according to claim 13, wherein the conveying pipes (10d) open into the same groove (23) formed in an external cylindrical surface (20aa) of the support (10b).

15. An aircraft turbomachine (1) comprising a mechanical reduction gear (6) according to any one of the claims 11 to 14.
